# EUROPÄISCHE PATENTANMELDUNG

(11) **EP 0 903 553 A2**
(43) Veröffentlichungstag der Anmeldung: **24.03.1999**
(21) Anmeldenummer: 98107937.9
(22) Anmeldetag: 30.04.1998
(51) Int. Cl.: F27D 5/00, F27D 3/00, F27D 3/12

(54) **Verfahren und Anlage zum Brennen von Dachziegel-Formlingen**

(30) Priorität: 30.04.1997 DE 19718252; 30.07.1997 DE 19718253
(71) Anmelder: Keller GmbH, 49479 Ibbenbüren-Laggenbeck (DE)
(72) Erfinder: Keller GmbH, 49479 Ibbenbüren-Laggenbeck (DE)

(57) **Zusammenfassung**

Die Erfindung betrifft ein Verfahren und eine Anlage zum Brennen von Dachziegel-Formlingen auf Ofenwagen. Das Erfindungswesentliche besteht darin, daß
a) getrocknete Dachziegel (1) für einen Tunnelofen-Durchlauf in Querreihen-Anordnung oberhalb der Tunnelofenwagen-Bewegungsbahn flachliegend einer Brennhiffsmittel-Beladestotion reihnweise zugefördert sowie in derselben, jeweils einlagig auf ein eine Vielzahl von Dachziegel-Formlingen aufnehmendes sowie zur formgerechten Dachziegel-Einzelunturstützung ausgebildetes Brenngestell (3) flachliegend aufgelegt werden, b) die formlingsbestückten Brenngestelle (3) um eine Horizontalachse geschwenkt sowie
mit Abstand zueinander In Querreihen derart auf einen Tunnelofenwagen (2) abgesetzt werden, daß die Formlingsreihen sine aus der Vertikalen geneigte Formlings-Schrägstellung aufweisen, und
c) nach dem Brennen die Brenngestelle (Brennhilfsmittel) (3) vom Tunnelofenwagen (2) abgenommen und für die Dachziegel-Entladung bis zur Dachziegel-Flachablage zurückgeschwenkt sowie auf einen Zwischenspeicherungsplatz abgestellt werden.

## Beschreibung

Die Erfindung bezieht sich auf ein Verfahren und eine Anlage zum Brennen von Dachziegel-Formlingen in einlagiger Anordnung.

Um Qualitätserzeugnisse zu erzielen, bedarf es insbesondere beim Brennen von Falzziegeln, die aufgrund ihrer querschnittsmäßigen Verformungen in bzw. auf unterschiedlichen Ebenen abgestützt werden sollten / müssen, Formlingsträger mit die Formlingsrückseite formgerecht unterstütsender Stützfläche - was durch sogen. H-Kassetten gewährleistet ist. In der Praxis werden bisher einzelne H-Kassetten, welche jeweils nur einen Dachziegelformling aufnehmen, verwendet. Dabei ergibt sich eine umständliche und zeitraubende Handhabung. Außerdem ist eine solche Anlage mit HKassetten platzraubend, kostspielig und letztlich kaum wirtschaftlich.

Der Erfindung liegt die Aufgabe zugrunde, ein einfacheres und wirtschaftlicheres Verfahren sowie eine dementsprechende Anlage zum einlagigen Brennen von Dachziegel-Formlingen zu schaffen, welches zwar aufgrund formgerechter Formlingsunterstützung die von H-Kassetten-Anlagen bekannte Produkt-Qualität ermöglicht, jedoch die Nachteile von H-Kassetten vermeidet.

Erfindungsgemäß wird dies durch ein Verfahren gemäß Patentanspruch 1 sowie eine Anlage gemäß Patentanspruch 6 oder 7 gelöst. Vorteilhafte Weiterbildungen ergeben sich aus den Unteransprüchen.

Mit dem erfindungsgemäßen Verfahren und der erfindungsgemäßen Anlage können auf einfachere und wirtschaftlichere Weise als bei bekannten Anlagen mit H-Kassetten für das Dachziegel-Brennen nun verzugsarme, d.h. weitgehendst verzugsfreie, Dachziegel erstellt werden, wie dies bisher nur unter Verwendung von H-Kassetten möglich war. Von besonderem Vorteil ist, daß eine Vielzahl von Dachziegel-Formlingen reihenweise auf einem Brenngestell angeordnet wird, wodurch sich die Brennhilfsmittel-Masse erheblich reduziert. Aufgrund der geringen aufzuheizenden Masse ergibt sich eine erhebliche Energieeinsparung beim Dachziegel-Brand. Da jedes Brenngestell eine große Breite - bis zu etwa 3,5 m bei derzeit handelsüblichen Profilen oder Rohren aus SiSiC - hat, kann es beim Einsatz in einem Tunnelofen die gesamte Wagenbreite oder (bei besonders breitem Ofenformat) die halbe Wagenbreite einnehmen und trotzdem sind nur zwei längsverlaufende Stützstreifen auf der Wagen-Oberseite erforderlich, was eine besonders einfache und hochwirksame Wagenisolation ermöglicht. Vorteilhaft ist auch, daß beim erfindungsgemäßen Brenngestell-Konzept nur das Traggestell (Seitenteile/Ständer plus Querverbinder) aus teurem Material, insbesondere Nichtoxidkermik (z.B. SiC oder SiSiC), und die Formlingsträger, welche die Funktion des H-Stegs einer H-Kassette übernehmen, aus preiswerterem Material, insbesondere Silikatkeramik (z.B. Cordierit, Mullit od. dgl.), hergestellt sein können ― hierdurch wird eine Senkung von Investitionskosten erzielt.

Ausführungsbeispiele der Erfindung sind auf den Zeichnungen schematisch dargestellt und werden im folgenden näher erläutert. Es zeigen:
Figur 1a - 1c jeweils eine Seitenansicht eines Tunnelofenwagen-Zuges mit erfindungsgemäßer Technik der Brennhilfsmittel-Handhabung zwecks Be- und Entladung (wobei die verschiedenen Verfahrensschritte dargestellt sind),
Figur 2 eine Frontalansicht eines erfindungsgemäßen Brenngestells, welches auf einem Ofenwagen abgestellt ist, wobei der besseren Übersicht wegen lediglich ein Formlingsträger einer Formlingsträgerreihe beladen ist,
Figur 3 eine Draufsicht auf Figur 2,
Figur 4 eine Stirnansicht entsprechend Ansicht "A" in Figur 2,
Figur 5 einen Schnitt entsprechend der Schnittlinie "B-B" in Figur 2,
Figur 6 einen Schnitt durch eine gegenüber Figur 5 abgeänderte Ausführungsform der Formlingsträger-Anordnung im Traggestell eines Brenngestelles,
Figur 7 eine Seitenansicht gemäß Einzelheit "EIII" in Figur 1b, wobei dem Klemm-Greifer für die stirnseitige Brenngestell-Klemmung ein Anschlag zwecks Brenngestell-Justierung zugeordnet ist,
Figur 8 eine um 90° gegenüber Figur 7 gedrehte Darstellung desselben Bereichs "EIII" und
Figur 9 denselben Bereich gemäß Figur 8 in Brenngestell-Justierlage.

Die Erfindung betrifft bei einem Verfahren und einer Anlage zum Brennen von Dachziegel-Formlingen 1 den Bereich der Be- und Entladung und somit den Brennhilfsmittel-Handhabungsbereich. Die Brennhilfsmittel werden als Brenngestell 3 bezeichnet. Jedes Brenngestell 3 setzt sich aus einem Traggestell 4 sowie einer Anzahl von Formlingsträgern 5 zusammen.

Die Traggestelle 4 erstrecken sich mit Ihrer Längenausdehnung quer zur Transportrichtung T der Tunnelofenwagen 2. Sie nehmen bei schmalen Tunnelöfen die gesamte Wagenbreite und bei breiten Tunnelöfen etwa die halbe Wagenbreite ein. Das sogenannte Traggestell 4 eines jeden Brenngestells 3 besitzt als Ständer ausgebildete Seitenteile 4a, welche von Querstangen 4b durchfaßt werden, auf denen die einzelnen Formlingsträger 5 angeordnet sind.

Jedes Brenngestell 3 ist derart ausgeführt, daß sich die darauf angeordneten Dachziegel-Formlinge 1 während des Brennens in einem aus der Vertikalen geneigten Winkel (von etwa 50 - 85 ° zwischen der Horizontalen und der Formlingsrückseite) abstützen. Jedes Traggestell 4 ist dabei derart gestaltet, daß es ohne Arretierungsmittel zur lagesicheren Anordnung aufstellbar ist. Auf dem Brenngestell 3 ist gemäß zeichnerischer Darstellung eine Formlingsquerreihe angeordnet - es können jedoch auch zwei Formlingsreihen vorgesehen sein.

Die Formlingsträger 5 sind derart ausgeführt, daß sich eine formgerechte Rückseiten-Abstützung für die Dachziegel-Formlinge (insbesondere FalzziegelFormlinge) ergibt. Die vorteilhafte Formlingsabstützung ist u.a. jeweils durch eine Stützleiste 5a gewährleistet. Um eine gute Heißluftversorgung für den zu brennenden Dachziegel-Formling 1 zu erzielen, sind entsprechende Durchbrüche 5b vorhanden.

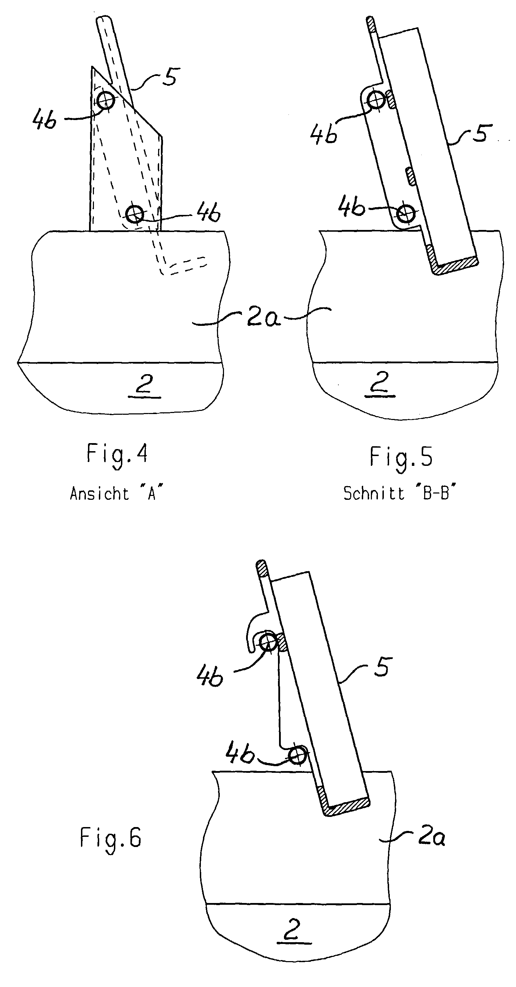

Die einzelnen Formlingsträger 5 können auf den Querstangen 4b in einer Steckverbindung (vgl. Figur 5) oder in einer Einhänge-Anordnung (vgl. Figur 6) angeordnet sein. Die dargestellten Ausführungsformen zeigen lediglich das Grundprinzip und lassen vielerlei Gestaltungsmöglichkeiten zu.

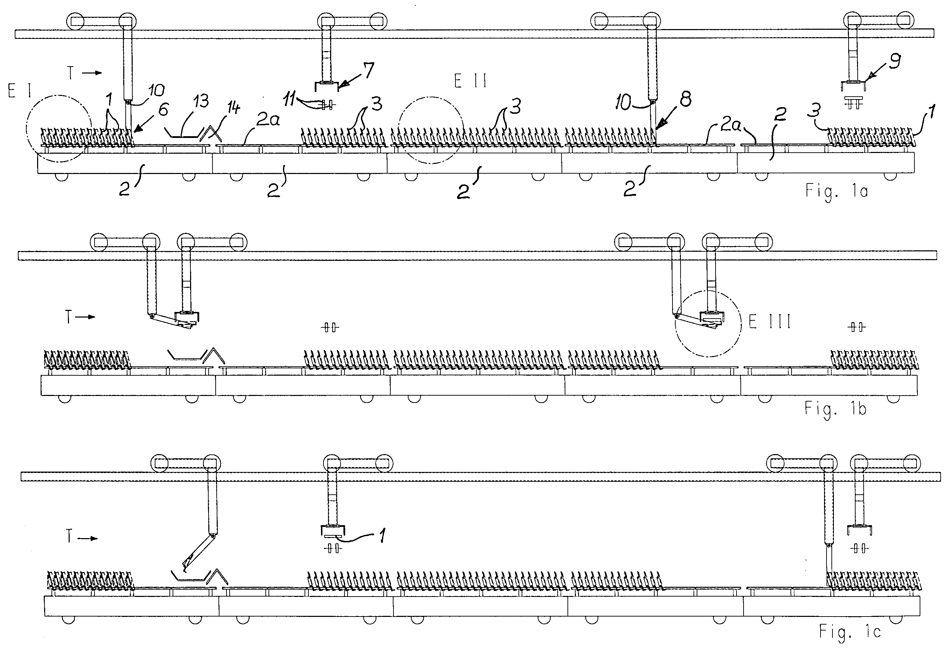

Bei der Ausführungsform gemäß Figur 5 ist ein leichtes Brenngestell-Verschwenken zwecks automatischer Brennhilfsmittel-Reinigung (vgl. Figur 1c) möglich, ohne daß dazu eine zusätzliche Sicherungsmaßnahme (Herabfallsicherung) erforderlich ist. Die Ausführung gemäß Figur 6 hat den Vorteil, daß bei einer eventuellen Formlingsträger-Beschädigung ein solcher Formlingsträger 5 leicht austauschbar ist.

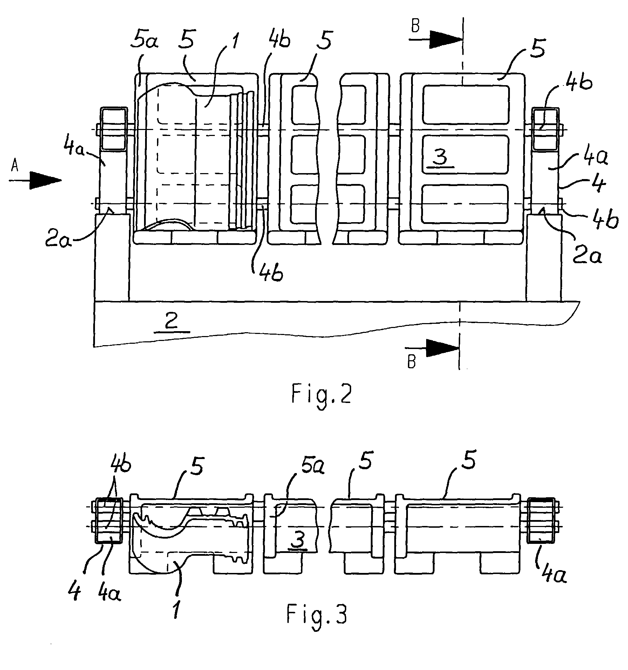

Wie aus Figur 2 und 3 zu ersehen ist, stehen die Querstangen 4b über die äußere Seitenfläche eines jeden Seitenteiles/Ständers 4a über. Die Stirnenden der Querstangen 4b stellen dabei die Greifflächen für das Brenngestell-Greifen dar.

In bevorzugter Weise sind die Traggestell-Seitenteile 4a sowie TraggestellQuerstangen 4b rohrförmig ausgebildet. Der Werkstoff ist hoch hitzebeständig und besteht vorzugsweise aus SiSiC - wogegen die feuerfesten Formlingsträger 5 vorzugsweise aus preiswerterem Keramikwerkstoff (z.B. Cordierit oder dgl.) bestehen.

Jeder Tunnelofenwagen 2 benötigt lediglich für das Brenngestell-Aufstellen stabile Stützflächen 2a, insbesondere Längsschienen, und kann im übrigen Bereich weniger belastbar und dafür entsprechend stark wärmeisolierend ausgebildet sein.

Der Bewegungsablauf der einzelnen Phasen des Be- und Entladens ist den Figuren 1a - 1c zu entnehmen, so daß sich eine ausführliche Beschreibung erübrigt. Es wird lediglich darauf hingewiesen, daß Pos. 6 an 7 und Pos. 8 an 9 übergibt. Die Förderer 11 und 12 verlaufen vorzugsweise horizontal - wie aus der Zeichnung (vgl. Fig. 1a - 1c) zu ersehen.

Bei der bevorzugten und dargestellten Ausführungsform erstreckt sich das erfindungsgemäße Verfahren über insgesamt 5 Tunnelofenwagen 2:
a) Dachziegel-Entladewagen
b) Brennhilfsmittel-Aufnahmewagen (für sogenannte Leerkassetten)
c) Brennhilfsmittel-Zwischenspeicherungswagen (auf welchen auch verzichtet werden kann)
d) Brennhilfsmittel-Abnahmewagen
e) Formlings-Beladewagen.

Die einzelnen Tunnelofenwagen 2 werden taktweise bewegt, wobei der sogenannte Wagenschub genauso groß wie die Ofenwagen-Länge ist. Das sogenannte "Feintakten" zum Beladen und Entladen der einzelnen Brenngestelle (Brennhilfsmittel) 3 erfolgt mittels der einzelnen, parallel zum Wagengleis (nicht dargestellt) Hin- und herfahrbaren Greifeinrichtungen, die als Ganzes jeweils mit 6, 7, 8 und 9 beziffert sind. Die Greifeinrichtungen 6 und 8 erfassen jeweils ein Brenngestell 3 an dessen Stirnenden und die Greifeinrichtungen 7 und 9 sind für das Dachziegel-Entladen bzw. für das FormlingsBeladen vorgesehen.

Die Greifeinrichtung 6 (für mit gebrannten Dachziegeln 2 beladene Brenngestelle 3 sowie zum Absetzen von geleerten Brenngestellen, sogenannten Leerkassetten) sowie die Greifeinrichtung 8 (für unbeladene/leere Brenngestelle 3) sind mit einem verfahrbaren, einknickbaren Grundgestell (dessen Schwenkachse mit 10 beziffert ist) versehen, wogegen die Dachziegel-Greifeinrichtung 7 (für den Entladevorgang) und die FormlingsGreifeinrichtung 9 (für den Beladevorgang) mit einem verfahrbaren Hubwerk ausgestattet sind. Die Kranschienen für die Verfahrbarkeit der Greifeinrichtungen 6 - 9 sind mit 20 beziffert.

Die Dachziegel-Abförderung erfolgt mittels eines quer zur TunnelofenwagenTransportrichtung T verlaufenden Förderers 11. Die Zuförderung der zu brennenden Dachziegel-Formlinge 1 erfolgt mittels eines quer zur Ofenwagen-Transportrichtung T verlaufenden Förderers 12.

Wie aus der Zeichnung zu ersehen ist, besteht zwischen den zu entleerenden Brenngestellen 3 und den entleerten sowie in eine Warteposition gebrachten Brenngestellen 3 ein Leerraum von einer Wagenlänge ― wobei sich dieser brenngestellfreie Raum in der aus Fig. 1a - 1c ersichtlichen 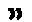 Grundstellung" vorzugsweise etwa hälftig auf zwei benachbarte Tunnelofenwagen 2 aufteilt. Innerhalb dieses brenngestellfreien Raumes ist in vorteilhafter Weise eine Ziegelbruch-Auffangeinrichtung 13, insbesondere ein sogenanntes Bruchband, angeordnet, auf welches eventuell vorhandene Bruchstücke, Abplatzungen und dgl. durch einfaches Verschwenken des unteren Bereichs der Tragkonstruktion der Greifeinrichtung 6 um ihre Schwenkachse 10 möglich ist (vgl. Figur 1c). Im selben brenngestellfreien Raum kann außerdem eine TunnelofenwagenReinigungseinrichtung 14 angeordnet sein ― dieselbe kann von einer Absaugeinrichtung gebildet sein oder eine solche (z.B. eine Saugleiste) aufweisen.

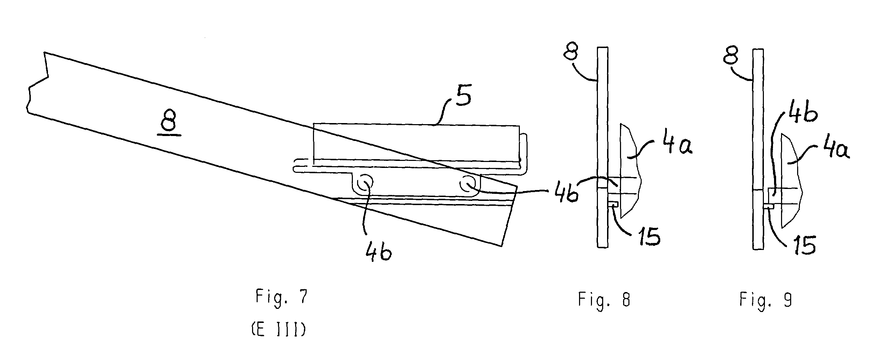

Zumindest der Brenngestell-Greifeinrichtung 8 ist eine aus den Figuren 7 - 9 entnehmbare Justiereinrichtung 15 zugeordnet, mittels der eine automatische Justierung eines aufgenommenen Brenngestells 3 in der Relativlage zu den parallel greifenden Backen möglich ist.

In bevorzugter Weise sind die Tunnelofenwagen 2 für Brenngut-Seitenbefeuerung konzipiert und dementsprechend sind die ein starres Widerlager bildenden und mit 2a bezifferten Längsschienen im Abstand zur Wagenplateau-Oberfläche angeordnet.

### Bezugszeichenliste

- 1: Dachziegel-Formling oder Dachziegel
- 2: Tunnelofenwagen
- 2a: stabile Stützflächen, insbesondere Längsschienen als Trag- und Abstellflächen für Brenngestelle 3
- 3: Brenngestelle
- 4: Traggestell (Bestandteil von 3)
- 4a: Seitenteile, insbesondere Ständer
- 4b: Querstangen
- 5: Formlingsträger (Bestandteil von 3)
- 5a: Stützleiste für Dachziegel-Falz oder gegenüber der Dachziegel-Hauptfläche
versetzte Kante
- 6: Greifeinrichtung für mit gebrannten Dachziegeln 2 beladene Brenngestelle 3
sowie zum Absetzen von geleerten Brenngestellen 3 (sogen. Leerkassetten)
- 7: Dachziegel-Greifeinrichtung (für den Entladevorgang)
- 8: Greifeinrichtung für unbeladene (leere) Brenngestelle 3
- 9: Formlings-Greifeinrichtung (für den Beladevorgang)
- 10: Schwenkachse (innerhalb von 6 - 8)
- 11: Förderer für die Abförderung gebrannter Dachziegel 1
- 12: Förderer für die Zufuhr von zu brennenden Dachziegel-Formlingen 1
- 13: Ziegelbruch-Auffangeinrichtung, insbes. sogen. Bruchband
- 14: Tunnelofenwagen-Reinigungseinrichtung
- 15: Justiereinrichtung für genaues Ausrichten (in Relativlage) eines Brenngestells 3 gegenüber der Greifbacken-Lage
- 20: Kranschienen für 6 - 9
- T: Transportrichtung

## Patentansprüche

1. Verfahren zum Brennen von Dachziegel-Formlingen auf Ofenwagen, wobei getrocknete Dachziegel in einlagiger Anordnung, unter Abstützung an der Rückseite, einen Tunnelofen durchlaufen, dadurch gekennzeichnet, daß
a) getrocknete Dachziegel (1) für einen Tunnelofen-Durchlauf in QuerreihenAnordnung außerhalb der Tunnelofenwagen-Bewegungsbahn flachliegend einer Brennhilfsmittel-Beladestation zugefördert sowie in derselben, jeweils einlagig auf ein eine Vielzahl von Dachziegel-Formlingen aufnehmendes sowie zur formgerechten Dachziegel-Einzelunterstützung ausgebildetes Brenngestell (3) - in Form eines Traggestells (4) mit daran angeordneten Formlingsträgern (5) - flachliegend aufgelegt werden,
b) die formlingsbestückten Brenngestelle (3) um eine Horizontalachse geschwenkt sowie mit Abstand zueinander derart auf einen Tunnelofenwagen (2) abgesetzt werden, daß die zur Wagentransportrichtung (T) quer verlaufenden Formlingsreihen eine aus der Vertikalen geneigte Formlings-Schrägstellung aufweisen, und
c) nach dem Brennen die Brenngestelle (Brennhilfsmittel) (3) vom Tunnelofenwagen (2) abgenommen und für die Dachziegel-Entladung bis zur Dachziegel-Flachlage zurückgeschwenkt sowie auf einen Zwischenspeicherungsplatz abgestellt werden.

2. Verfahren nach Anspruch 1, dadurch gekennzeichnet, daß die Brenngestell-Beladung mit zu brennenden Dachziegel-Formlingen (1) und /oder die Brenngestell-Entladung von gebrannten Dachziegeln (1) oberhalb der Tunnelofenwagen (2) durchgeführt wird.

3. Verfahren nach Anspruch 1, dadurch gekennzeichnet, daß die Brenngestell-Beladung mit zu brennenden Dachziegel-Formlingen (1) und/oder die Brenngestell-Entladung von gebrannten Dachziegel-Formlingen (1) neben der Durchlaufbahn der Tunnelofenwagen (2) durchgeführt wird.

4. Verfahren nach einem der Ansprüche 1 bis 3, dadurch gekennzeichnet, daß die Brenngestelle (3) für Umsetzbewegungen jeweils stirnendig, d. h. an beiden Enden der Fromlingsträger-Reihe ergriffen werden.

5. Verfahren nach einem der Ansprüche 1 bis 4, dadurch gekennzeichnet, daß die Brenngestelle (3) mit höhenmäßigem Abstand zur OfenwagenPlattform abgestellt und durch einen seitenbefeuerten Tunnelofen gefahren werden.

6. Anlage zum Brennen von Dachziegel-Formlingen unter Zuhilfenahme von Brennhilfsmitteln, welche mit die Formlings-Rückseite formgerecht unterstützenden Stützelementen oder Stützflächen ausgebildet sind, sowie zur Durchführung des Verfahrens nach einem der Ansprüche 1 bis 5, dadurch gekennzeichnet, daß die Brennhilfsmittel von Brenngestellen (3) gebildet sind, welche jeweils ein Traggestell (Grundgestell) (4) und eine Vielzahl daran in einer horizontalen Reihe angeordneter Formlingsträger (5) aufweisen, wobei das Traggestell (4) selbststehend, d. h. arretiermittelfrei standsicher absetzbar, ausgeführt ist und zwischen zwei Seitenteilen (Ständern) (4a) querverlaufende rohrförmige Querstangen (4b) aufweist, welche die Formlingsträger (5) in der Funktionsstellung für das Dachziegel-Brennen in einer aus der vertikalen geneigten Schrägstellung aufnehmen (tragen) sowie stirnendig Greifflächen zum Greifmittel-Ansetzen aufweisen.

7. Anlage zum Brennen von Dachziegel-Formlingen unter Zuhilfenahme von Brennhilfsmitteln, welche mit die Formlings-Rückseite formgerecht unterstützenden Stützelementen oder Stützflächen ausgebildet sind, sowie zur Durchführung des Verfahrens nach einem der Ansprüche, dadurch gekennzeichnet, daß
a) die Brennhilfsmittel von Brenngestellen (3) mit in einem Traggestell (Grundgestell) (4) in einer horizontalen Reihe sowie jeweils in einer aus der vertikalen geneigten Schrägstellung, angeordneten Formlingsträgern (5) gebildet sind, die stirnendige Greifflächen zum Greifmittel-Ansetzen aufweisen sowie arretiermittelfrei standsicher absetzbar ausgeführt sind.
b) für die Zuführung von zu brennenden Dachziegel-Formlingen (1) und / oder für die Abführung der gebrannten Dachziegel (1) horizontale Förderer (11,12) vorhanden sind, die sich außerhalb der TunnelofenBewegungsbahn, jedoch mit geringem Abstand zu derselben, erstrecken, und
c) zum Brenngestell-Umsetzen Greifeinrichtungen (6, 8) mit um eine horizontale Schwenkachse (10) bewegbaren Greifköpfen, insbesondere Parallelgreifern, vorhanden sind.

8. Anlage nach Anspruch 6 oder 7, dadurch gekennzeichnet, daß die Greifeinrichtungen (6, 7, 8, 9) für das Umsetzen der Brenngestelle (3) sowie der Dachziegel-Formlinge und Dachziegel (1) auf einer oberhalb der Tunnelofenwagen-Durchlaufbahn angeordneten Kranbahn verfahrbar vorgesehen sind.

9. Anlage nach einem der Ansprüche 6 bis 8, dadurch gekennzeichnet, daß die Brenngestelle (3) jeweils ein Traggestell (4) mit zwei ständerbildenden Seitenteilen (4a) sowie außenseitig über diese (4a) hinausragenden Querverbindern (Pos. 4b), auf welche eine Vielzahl von heißgasdurchströmbaren Formlingsträgern (5) in Steck- und / oder Einhak-Verbindung angeordnet sind, aufweisen.

10. Anlage nach einem der Ansprüche 6 bis 9, dadurch gekennzeichnet, daß die Traggestell-Seitenteile (4a) und Querverbinder aus hitzebeständigem Rohr, insbesondere aus SiSiC, bestehen.

11. Anlage nach einem der Ansprüche 6 bis 10, dadurch gekennzeichnet, daß die Formlingsträger (5) in der Art eines H-Kassetten-Steges ausgebildet sind und aus einem niedrigbelastbaren Werkstoff, insbesondere auf Keramik-Basis, bestehen.
